# FASCICULE DE BREVET EUROPEEN

(11) **EP 3 724 468 B1**
(45) Date de publication et mention de la délivrance du brevet: **04.08.2021**
(21) Numéro de dépôt: 18821703.8
(22) Date de dépôt: 08.11.2018
(51) Int. Cl.: F01N 3/10, F02D 41/02, B60W 10/06, B60W 20/16, F01N 9/00, F01N 3/20, B60W 10/08

(54) **SYSTEME ET PROCEDE DE PILOTAGE DE LA TEMPERATURE D'UN CATALYSEUR D'UNE LIGNE D'ECHAPPEMENT DE VEHICULE, ET VEHICULE AUTOMOBILE LES INCORPORANT**
SYSTEM UND VERFAHREN ZUR REGELUNG DER TEMPERATUR EINES KATALYSATORS EINER FAHRZEUGABGASLEITUNG UND DAMIT AUSGESTATTETES KRAFTFAHRZEUG
SYSTEM AND METHOD FOR CONTROLLING THE TEMPERATURE OF A CATALYST OF A VEHICLE EXHAUST LINE, AND A MOTOR VEHICLE INCORPORATING SAME

(30) Priorité: 14.12.2017 FR 1762137
(43) Date de publication de la demande: 21.10.2020
(73) Titulaire: PSA Automobiles SA, 78300 Poissy (FR)
(72) Inventeur: DUBILLARD, Frederic, 78600 Maisons Laffitte (FR); MILHAU, Yohan, 78630 Orgeval (FR); LEBORGNE, Ludmila, 92350 Le Plessis Robinson (FR)
(86) Numéro de dépôt international: PCT/FR2018/052758
(87) Numéro de publication internationale: WO 2019/115891

(56) Documents cités:
- EP-A1- 1 316 694
- DE-A1-102016 121 297
- DE-A1-102017 111 316
- FR-A1- 2 994 920
- GB-A- 2 503 725
- US-A1- 2013 231 809
- US-A1- 2015 298 687

## Description

L'invention a pour objet un système de pilotage de la température d'un catalyseur d'une ligne d'échappement de véhicule à motorisation hybride. Plus particulièrement, l'invention entend proposer une solution pour gérer de façon optimum la température de tels catalyseurs équipant les véhicules, placés à l'heure actuelle dans la ligne d'échappement des gaz de combustion émis dans le moteur thermique d'un véhicule.

Dans la suite, l'invention est présentée en lien avec l'une de ces applications, plus précisément une application à un véhicule automobile à hybridation électrique, c'est-à-dire comportant un moteur thermique et au moins un moteur électrique associé à des moyens de stockage d'énergie.

Toutefois, il doit être noté que la présente invention n'est pas limitée à l'utilisation d'une machine électrique dans un véhicule hybride, le véhicule pouvant par exemple comporter une chaîne de transmission comprenant au moins un moteur thermique et au moins une machine (ou moteur) hydraulique ou encore à air comprimé.

Dans le cadre de la réduction des émissions polluantes liées au fonctionnement des moteurs thermiques des véhicules automobiles, les normes légales ont amené les constructeurs à intégrer dans la ligne d'échappement de ces moteurs plusieurs sortes de dispositifs catalytiques de dépollution des gaz de combustion desdits moteurs.

Le catalyseur d'échappement ou pot catalytique joue un rôle important dans le système d'échappement d'une voiture. Il a ainsi pour but de minimiser la pollution pour mieux respecter l'environnement en réduisant les polluants contenus dans les gaz d'échappement. Le pot catalytique est destiné à réduire, par catalyse, les gaz polluants, notamment ceux imbrûlés à l'échappement.

On connaît plus particulièrement les catalyseurs trois voies des moteurs à allumage commandé (fonctionnant à l'essence) qui permettent d'oxyder les hydrocarbures imbrûlés (HC) et le monoxyde d'azote, et de réduire les oxydes d'azote (NOx) émis par le moteur. On connaît aussi les catalyseurs d'oxydation des moteurs à allumage par compression (du type diesel) qui permettent d'oxyder les hydrocarbures imbrûlés et le monoxyde d'azote émis par le moteur fonctionnant en mélange pauvre. De manière connue, un tel catalyseur fonctionne de manière continue. Son efficacité de traitement, qui est définie pour chaque type de polluant (HC, CO ou NOx) comme le taux de conversion de la quantité de polluant qui entre dans le catalyseur, dépend en premier lieu de la température instantanée du catalyseur.

On sait que le taux de conversion commence à atteindre des valeurs acceptables, comprises entre 50% et 90%, lorsque la température du catalyseur est par exemple comprise entre environ 250°C et 300°C. Ces températures sont couramment atteintes et dépassées lors du fonctionnement en continu d'un moteur thermique.

Au démarrage, le temps d'amorçage d'un catalyseur varie généralement entre 20 et 40 secondes. Avec un véhicule hybride, et en particulier rechargeable (la machine électrique peut fonctionner en mode « moteur » ou en mode « génératrice » dans lequel elle devient un alternateur qui fournit un courant électrique destiné à être stockée dans une batterie d'accumulateurs), le démarrage à la mise en action n'est pas souhaitable car le système électrique peut généralement réaliser la traction.

De plus, avec les véhicules hybrides, une fois le moteur chaud, le roulage électrique peut être suffisamment long pour laisser refroidir la ligne d'échappement de sorte qu'il se produit un désamorçage du catalyseur ayant des impacts négatifs sur les polluants associés.

Il n'existe pas à l'heure actuelle de système permettant de gérer de façon optimum à la fois la température du catalyseur (en vue de son amorçage et surtout de la conservation de cet état) et la gestion des couples moteur thermique et électrique au regard d'une part de la demande de puissance motrice instantanée de la part du conducteur (toujours prioritaire) et d'autre part d'une utilisation optimisée du couple électrique vis-à-vis du couple moteur (thermique) afin de réduire au maximum l'utilisation de carburant fossile et/ou maximisant le roulage électrique.

De ce point on connaît le brevet US 20060156710 qui propose une solution qui n'est pas satisfaisante. Ce brevet décrit une stratégie de chauffe d'un catalyseur de véhicule hybride afin d'atteindre une valeur seuil de température de catalyseur : si la valeur de température est inférieure à la valeur seuil, le couple produit par le moteur électrique augmente et le couple produit par le moteur à combustion interne diminue.

On connait en outre des documents de brevet US-A1-2013231809 et FR-A1-2994920 un système de pilotage selon le préambule de la revendication 1.

La présente invention a notamment pour but d'éviter ces inconvénients de la technique antérieure et de proposer un système de pilotage de la température d'un catalyseur d'une ligne d'échappement de véhicule hybride permettant de gérer le plus efficacement possible, sans nécessiter de changements structurels, le groupe motopropulseur, dans toutes les situations de vie du véhicule hybride, afin de minimiser l'utilisation des leviers du moteur thermique pour la gestion du catalyseur (afin de le conserver en mode « actif » dans lequel il réduit les gaz nocifs).

Dans ce but, la présente invention propose un système de pilotage de la température d'un catalyseur d'une ligne d'échappement de véhicule à motorisation hybride, comportant :
- un moteur thermique ;
- au moins une autre source motrice ;
- au moins un stockeur d'énergie (12) pour alimenter l'autre source motrice (10, 18) ;
- un catalyseur destiné au traitement (notamment par réduction) des émissions polluantes provenant du moteur thermique, le catalyseur étant chauffé lors de l'utilisation du moteur thermique et présentant une température d'amorçage Tₐ à partir de laquelle ledit catalyseur est en mode actif dans lequel ledit traitement est réalisé ; et
- un moyen d'analyse et de commande apte à déterminer une température instantanée du catalyseur,
le moyen d'analyse et de commande étant agencé de sorte à :
- déterminer une température de seuil Tₛ du catalyseur à partir d'une température de seuil prédéfinie stockée dans le moyen d'analyse et de commande à laquelle est rajoutée une valeur de température variable déterminée par le moyen d'analyse et de commande en fonction d'au moins un paramètre du stockeur d'énergie,
- autoriser, lorsque la température de seuil est atteinte, via la commande du moyen d'analyse et de commande, l'arrêt du chauffage du catalyseur pendant une durée tout en le maintenant en mode actif et
- commander le chauffage du catalyseur jusqu'à atteindre la température de seuil lorsqu'une température instantanée du catalyseur déterminée par le moyen d'analyse et de commande est inférieure à la température de seuil.

Grâce à l'invention, il est dorénavant possible d'optimiser le pilotage du groupe motopropulseur d'un véhicule hybride par la gestion des points de fonctionnement de chacun des organes producteurs de couple, permettant ainsi de conserver le catalyseur chaud (à une température au moins égale à sa température d'amorçage Tₐ) en prévision d'un long roulage avec le moteur thermique éteint, tout en évitant de réchauffer inutilement le catalyseur lorsque l'état du stockeur d'énergie ne permet pas un roulage électrique.

En outre, tout en respectant les normes d'émissions de gaz polluants, le système selon l'invention permet de minimiser la consommation de carburant fossile.

Enfin, grâce au système selon l'invention, on peut réaliser un gain économique car, du fait de son processus optimisé de gestion de la température instantanée du catalyseur, un dimensionnement important de ce dernier ou l'utilisation d'un catalyseur performant mais couteux n'est plus une nécessité, autrement dit un catalyseur classique pour véhicule hybride est parfaitement envisageable/utilisable.

On entend par l'expression « moyen d'analyse et de commande » un système embarqué équipant à l'heure actuelle les véhicules, notamment ceux du type à motorisation hybride, et qui a pour fonction d'analyser, enregistrer/stocker des informations/données, contrôler, notamment via des capteurs, et commander les différents organes fonctionnels d'un véhicule. Un tel moyen est bien connu de l'homme du métier. On notera que, de façon classique, le moyen d'analyse et de commande est relié à l'ensemble des capteurs ou analogues du véhicule, ce qui lui permet de mesurer, ou de calculer, des paramètres extérieurs tels que la température extérieure, l'altitude ou une pente (via une géo-localisation), ou encore des caractéristiques propres au véhicule telles que la température du catalyseur ou le niveau de charge du bloc batterie (le stockeur d'énergie de l'autre source motrice). Ces capteurs ou analogues sont ainsi considérés comme partie intégrante du moyen d'analyse et de commande du système selon l'invention.

On entend par l'expression « mode actif » relativement au catalyseur le fait que, lorsqu'il se trouve dans cet état, ce dernier traite efficacement, par réduction ou d'autres procédés chimiques, les gaz d'échappement selon son emploi.

De préférence, la valeur de température variable est en outre fonction d'un ou de plusieurs paramètres parmi une ou plusieurs caractéristiques liées à la température instantanée du catalyseur, une puissance disponible de l'autre source motrice, un mode de conduite sélectionné par le conducteur ou déterminé par le moyen d'analyse et de commande, une marge de temporisation et/ou à des paramètres extérieurs au véhicule.

On entend par l'expression « marge de temporisation » un délai de réponse (hystérésis) se retrouvant classiquement dans les systèmes électroniques/électriques et qui est bien connu de l'homme du métier. En effet, cette marge de temporisation, ou plus simplement « temporisation », permet de confirmer qu'une action électrique/électronique ait bien effectivement réalisée ou à réaliser.

On entend par l'expression « mode de conduite » le mode d'utilisation des roues et/ou des sources motrices (moteur thermique et autre source motrice), par exemple si le véhicule utilise quatre roues motrices avec ou sans l'assistance du moteur électrique ou encore si le véhicule adopte un roulage à bas régime du moteur thermique.

Avantageusement, la température de seuil est au plus égale à une température maximum admissible du catalyseur. A compter de cette température maximum admissible, une dégradation physique du catalyseur peut survenir.

Selon une possibilité offerte par l'invention, la durée est variable.

De préférence, la variabilité de la durée est fonction de la température extérieure et/ou de l'altitude.

Selon une particularité de l'invention, la durée est comprise entre 3 minutes et 60 minutes.

De préférence, l'autre source motrice consiste en au moins un moteur électrique.

Dans le même but, la présente invention propose également un véhicule automobile hybride comportant au moins un système de pilotage tel que succinctement décrit ci-dessus.

Toujours dans le même but, la présente invention propose un procédé de pilotage de la température d'un catalyseur d'une ligne d'échappement de véhicule à motorisation hybride, le catalyseur, destiné au traitement (notamment par réduction) des émissions polluantes provenant du moteur thermique, étant chauffé lors de l'utilisation du moteur thermique présentant une température d'amorçage à partir de laquelle le catalyseur est en mode actif dans lequel ledit traitement est réalisé, une température de seuil du catalyseur étant déterminée à partir d'une température de seuil prédéfinie à laquelle est rajoutée une valeur de température variable fonction d'au moins un paramètre d'un stockeur d'énergie d'une autre source motrice, la température de seuil atteinte autorisant l'arrêt du chauffage du catalyseur pendant une durée tout en le maintenant en mode actif et lorsqu'une température instantanée du catalyseur déterminée par le moyen d'analyse et de commande est inférieure à la température de seuil, on commande le chauffage du catalyseur jusqu'à atteindre la température de seuil.

Les avantages du procédé et du véhicule automobile hybride conformes à l'invention étant similaires à ceux du système de pilotage de la température d'un catalyseur de véhicule à motorisation hybride énumérés plus haut, ils ne sont pas répétés ici.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est un schéma d'un véhicule hybride selon un mode de réalisation du système selon l'invention ;
- la figure 2 est un schéma à multiples entrées illustrant en fonction du temps (en abscisse) d'une part la température instantanée du catalyseur en fonction d'une température de seuil Tₛ, fonction des composantes Tₛ₁ et T₂, dudit catalyseur, et des stratégies A, B et C susceptibles d'être mises en oeuvre pour chaque état (niveau de température) du catalyseur ainsi que, d'autre part, sous ces diagrammes, un Timer (durée ou laps de temps) du catalyseur dans l'état 2 et de la différence de température Tₛ en fonction du Timer du catalyseur dans l'état 2 ;
- la figure 3 est un organigramme illustrant la variation de la composante T₂ en fonction de l'état du catalyseur.

A nouveau, il est rappelé que l'invention est illustrée ici dans un exemple avec un véhicule hybride électrique mais la machine électrique peut être remplacée par exemple par une technologie pneumatique ou hydraulique, de préférence hydraulique.

Par ailleurs, il doit être noté que la présente invention n'entend pas modifier le catalyseur utilisé classiquement pour un véhicule à motorisation hybride, voire pour un véhicule conventionnel. En outre, l'invention ne prévoit aucune modification, ajout ou suppression, au niveau de la structure ou de l'architecture du véhicule, plus précisément dans la ligne d'échappement.

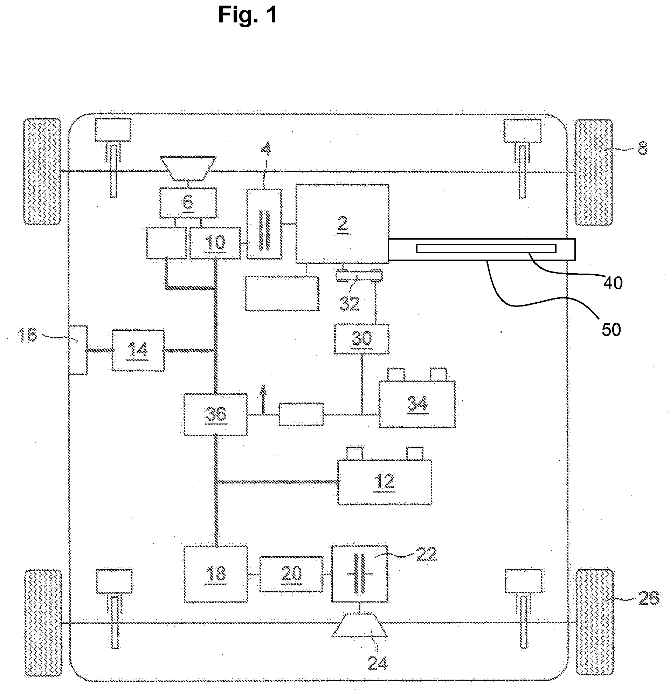

La figure 1 présente un véhicule automobile, pouvant servir à illustrer l'invention, comprenant par exemple les équipements et organes suivants.

Cette figure présente un véhicule hybride comportant un moteur thermique 2 entraînant par un embrayage 4 piloté de manière automatique, une transmission 6 présentant différents rapports de vitesse, reliée aux roues avant motrices 8 de ce véhicule.

Une ligne d'échappement 50 dispose de moyens aptes à traiter les gaz d'échappement, dont notamment les imbrulés, provenant de la chambre de combustion du moteur thermique 2. Dans le cadre de la présente invention, ces moyens consistent plus particulièrement en un catalyseur 40 de ligne d'échappement 50.

L'arbre d'entrée de la transmission 6 recevant le mouvement de l'embrayage 4, comporte une machine électrique avant de traction 10 alimentée par une batterie basse tension de traction 12. De cette manière la machine électrique avant 10 peut délivrer un couple sur les roues motrices 8 sans passer par l'embrayage 4, en utilisant les différents rapports de vitesse proposés par la transmission 6.

Un chargeur embarqué 14 peut être relié par une prise extérieure 16 à un réseau de distribution d'électricité, pour recharger la batterie de traction 12 quand le véhicule est à l'arrêt. La batterie de traction 12 présente une basse tension, qui peut être par exemple de 220 ou 300 Volts (V).

La batterie de traction 12 alimente aussi une machine électrique arrière de traction 18 reliée successivement par un réducteur 20 et un système de crabotage 22, à un différentiel arrière 24 répartissant le mouvement vers les roues arrière du véhicule 26.

Un alternateur, également désigné alterno-démarreur, 30 relié en permanence par une courroie 32 au moteur thermique 2, alimente un réseau de bord 34 comportant une batterie très basse tension. En complément la batterie du réseau de bord 34 peut être chargée par un convertisseur de tension continue DC/DC 36, recevant une énergie électrique de la batterie de traction 12, ou d'une machine électrique avant 10 ou arrière 18 si le niveau d'énergie de cette batterie de traction est insuffisant.

Lors des freinages du véhicule ou d'un relâchement de la pédale d'accélérateur, les machines électriques 10, 18 travaillent en génératrice en délivrant un couple de freinage, pour recharger la batterie de traction 12 et récupérer une énergie.

Un moyen d'analyse et de commande, non représenté sur les figures annexées, contrôle le fonctionnement de ce groupe motopropulseur pour répondre aux demandes du conducteur tout en optimisant les consommations d'énergie et les émissions de gaz polluants selon des stratégies classiques.

Dans cet exemple d'exécution, la batterie de traction 12 constitue le stockeur d'énergie selon l'invention tandis que l'ensemble formé par la machine électrique avant de traction 10 et la machine électrique arrière de traction 18 constitue l'autre source motrice (hybride) selon l'invention.

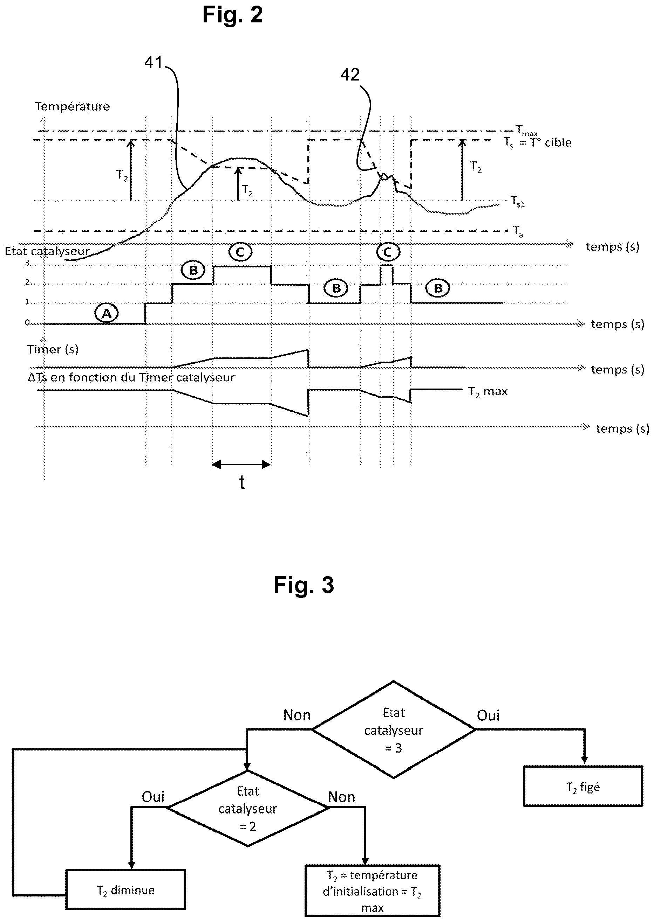

Comme on peut le voir sur la figure 2 annexée, le système et procédé selon l'invention définit quatre états du catalyseur 40, noté de 0 à 3, correspondant chacun à une température de celui-ci. Le passage entre chaque état est défini en fonction de la température estimée (par calcul à partir de données définies) et/ou mesurée dans le catalyseur 40 ou en fonction d'une température cible Tₛ à atteindre.

Ainsi, sur cette figure, les quatre états susmentionnés sont visibles :
- état 0 : le catalyseur 40 est froid et ne traite pas, ou très peu, les émissions de gaz polluants provenant de la combustion du carburant fossile ;
- état 1 : le catalyseur 40 a atteint sa température d'amorçage Tₐ, seuil à partir duquel il commence à traiter efficacement (selon un pourcentage de traitement au moins égal à 50% des émissions de gaz polluants et pouvant aller jusqu'à 95% de traitement en fonction de la prescription définie pour le véhicule) en particulier les oxydes d'azote NOx mais le catalyseur 40 est encore proche de la température de désamorçage (la température 1 du catalyseur 40 est juste supérieure ou égale à Tₐ) ;
- état 2 : le catalyseur 40 atteint sa température intermédiaire Tᵢ et traite efficacement les polluants (pourcentage de traitement au moins égal à 60%) mais il n'est pas encore à la température cible Tₛ pour pouvoir réaliser une « apnée électrique », autrement dit pendant une durée t, seul le moteur électrique contribue à la propulsion du véhicule, sans faire appel au moteur thermique 2 ;
- état 3 : le catalyseur 40 atteint sa température cible ou de seuil Tₛ et peut donc réaliser une apnée électrique pendant une durée relativement longue t.

Dans le cadre de la présente invention, on va associer à chaque état du catalyseur 40 un offset (également désigné différence de température cible) ou température variable T₂ qui va faire varier la température de seuil Tₛ que l'on cherche à atteindre.

De ce fait, la température Tₛ est rendue variable afin de pouvoir s'adapter aux différentes configurations du groupe motopropulseur et/ou aux différentes conditions extérieures. Par exemple, il est inutile de surchauffer le catalyseur 40 (ce qui provoque ponctuellement de la surconsommation de carburant) si on ne dispose pas d'assez d'énergie ou de puissance dans le bloc batterie (également désigné sous le terme générique de stockeur) pour pouvoir rouler le moteur éteint pendant un temps t.

De plus, afin d'être sûr de converger et d'arrêter la surchauffe, on inclut une dimension temporelle qui vient progressivement diminuer la valeur de T₂, autrement dit cette température T₂ est variable en fonction du temps de roulage du véhicule, généralement de façon décroissante lorsque ce temps de roulage est un temps de roulage avec uniquement le moteur thermique 2 ou principalement avec ce dernier. Bien entendu, ce paramètre du temps de roulage influant sur la valeur de T₂ dépend également du type de roulage (c'est-à-dire du « mode de conduite ») pratiqué, par exemple quatre roues motrices avec ou sans l'assistance du moteur électrique ou encore un roulage à bas régime du moteur thermique 2.

Ainsi, cette température T₂ est variable en fonction de plusieurs paramètres :
- des paramètres liés au stockeur alternatif (par exemple la batterie ou bloc batterie dans le cas d'une voiture électrique) tels qu'en particulier, mais non exclusivement, le niveau de la charge de la batterie/stockeur (énergie), la puissance disponible du stockeur et/ou de la ou des machines électriques, la température du stockeur ;
- du mode de conduite tel que notamment le mode AWD (« All Wheel Drive » ou « toutes roues motrices ») ou le mode Sport (classiquement par débridage du moteur thermique 2) ;
- des paramètres extérieurs au véhicule tels que notamment l'altitude, la pente de la route ou la température extérieure.

Dans l'exemple choisi pour illustrer l'invention, on définit par ailleurs trois stratégies A, B et C qui sont liées aux différents états susvisés du catalyseur 40. La stratégie A débute lorsque la température instantanée 41 du catalyseur 40 est inférieure à la température d'amorçage Tₐ, la stratégie B débute lorsque la température instantanée 41 du catalyseur 40 est égale ou supérieure à la température d'amorçage Tₐ mais inférieure à la température de seuil Tₛ (= Tₛ₁ + T₂) tandis que la stratégie C débute lorsque la température instantanée 41 du catalyseur 40 a atteint la température de seuil Tₛ.

Selon une première possibilité, on fait passer le catalyseur 40 de la stratégie A vers la stratégie B. Ceci permet de poursuivre la chauffe du catalyseur 40 via les leviers hybrides jusqu'à un seuil de température plus élevé. Ceci permet d'optimiser la disponibilité hybride sur la phase suivante, tout en minimisant la consommation de carburant : en montant plus haut en température, le catalyseur 40 mettra plus de temps à refroidir jusqu'au seuil de l'état 1 (correspondant à la température Tₐ) et donc le réglage hybride optimisé en consommation peut être conservé plus longtemps.

Selon une autre possibilité, on fait passer le catalyseur 40 de la stratégie A directement vers la stratégie C. Cette option consiste à appliquer directement un réglage du groupe motopropulseur hybride optimisé en consommation.

Dans le cadre de la stratégie A, on essaie, afin de maitriser au mieux les émissions de gaz polluants, de maintenir le moteur thermique 2 dans un état de régime le plus stable possible, autrement dit on recherche à appliquer un couple constant déterminé au moteur thermique 2.

Selon une première variante, le moteur thermique 2 est accouplé (aux roues du véhicule) et est positionné dès sa mise en action sur un point de charge fixe optimal pour le compromis consommation/dépollution via le(s) système(s) électrique(s). Le couple du moteur thermique 2 produit sert soit à la traction (dans ce cas, le moteur/machine électrique fournit éventuellement le complément) soit à la recharge de la batterie (bloc batterie) si le couple moteur (thermique) produit est supérieur au besoin de traction.

Selon une seconde variante, le moteur thermique 2 est maintenu le plus possible au ralenti (découplé des roues) avec un réglage optimum d'un point de vue consommation/émissions permettant de chauffer le catalyseur 40 afin de traiter les émissions. Pendant ce laps de temps, la traction du véhicule est réalisée par la machine/moteur électrique.

Dans cette seconde variante, tant que le catalyseur 40 n'est pas amorcé, si la machine/moteur électrique ne peut pas réaliser la demande de puissance motrice instantanée de la part du conducteur, celle-ci sera réalisée au maximum par ladite machine électrique et le moteur thermique 2 réalisera le complément exigé par l'Interprétation de la demande de puissance motrice instantanée de la part du conducteur (désignée IVC).

On entend par l'expression « demande de puissance motrice instantanée de la part du conducteur », la volonté du conducteur d'accélérer ou de freiner le déplacement du véhicule. Cette demande de puissance motrice instantanée de la part du conducteur s'exprime en puissance (Watt, noté de façon abrégé W), mais à une vitesse et une masse donnée du véhicule s'exprime de façon équivalente en couple (Newton mètre, noté de façon abrégé Nm), en accélération (en mètre par seconde au carré, soit m.s⁻²) et dépend principalement, par exemple, des positions d'une pédale d'accélération et d'une pédale de frein, de l'état d'un levier de vitesse d'une boîte de vitesses, du mode de conduite sélectionné, de la vitesse du véhicule et/ou des aides à la conduite. Ici, cette demande de puissance motrice instantanée de la part du conducteur est exprimée en puissance, et non en couple, à l'instar notamment de la réserve de puissance constituée dans le stockeur d'énergie.

Dans le cadre de la stratégie B, le catalyseur 40 est amorcé mais on a besoin de chauffer le catalyseur 40 pour atteindre la température cible Tₛ du catalyseur 40.

Pour réaliser ce chauffage, on vient imposer un couple minimal au moteur thermique 2. Comme précédemment, le couple réalisé par le moteur thermique 2 sert à la traction et si le couple demandé par le conducteur est plus faible que le couple minimal, le complément sert à recharger la batterie. Par rapport à la stratégie A, le catalyseur 40 est ici déjà amorcé de sorte que le compromis consommation/émissions (de gaz polluants) pourra être différent.

Dans le cadre de la stratégie C, la température cible Tₛ étant atteinte, et le catalyseur 40 bien entendu déjà amorcé et fonctionnant pleinement (pourcentage élevé de conversion des gaz), la stratégie C consiste à utiliser un réglage optimisant la consommation de carburant en utilisant au maximum la disponibilité hybride, soit en suivant une phase de roulage moteur thermique 2 éteint pendant une durée t.

Afin de protéger physiquement le catalyseur 40, par construction, la valeur T₂, complémentaire à Tₛ₁ pour former Tₛ, ne pourra pas dépasser le seuil de température maximal Tₘₐₓ admissible par le catalyseur 40.

Comme cela a été indiqué précédemment, le Timer du catalyseur 40 est la durée ou le temps pendant lequel ce dernier est dans l'état 2, soit ici à une température au moins égale à Tₛ₁. C'est à compter de cet état 2 que l'on va atteindre la température de seuil Tₛ via la température complémentaire variable, ou d'offset, T₂.

Le graphe représentant le ΔT° cible en fonction du Timer du catalyseur 40 permet d'exprimer la variation de la valeur de T₂ par rapport à une valeur maximale, référencé 42 sur la figure annexée, de cette variable T₂ en fonction du temps écoulé lorsque le catalyseur 40 est dans l'état 2. On constate que c'est lorsque le catalyseur 40 se trouve dans l'état 2 que la valeur de la température T₂ diminue par rapport à sa valeur maximale 2.

Comme cela a été exposé précédemment, une fois la température de seuil Tₛ atteinte, la durée t, pendant laquelle il est possible de se passer du moteur thermique 2 pour chauffer la ligne d'échappement et en particulier le catalyseur 40, est variable mais peut durer au moins plusieurs minutes et jusqu'à une heure, voire un peu plus si les conditions d'environnement (température extérieure et altitude en particulier) le permettent. Bien entendu, même s'il est possible de maintenir le moteur thermique 2 éteint, ce dernier sera de nouveau utilisé si la seule machine électrique ne peut satisfaire la demande de puissance motrice instantanée de la part du conducteur.

La figure 3 est un organigramme illustrant les variations de la composante T₂ de la température de seuil Tₛ en fonction de l'état du catalyseur 40.

Ainsi, lorsque le catalyseur 40 est dans l'état 3, T₂ est figé ou constant tandis que lorsque le catalyseur 40 est dans l'état 2, T₂ diminue. Enfin, lorsque le catalyseur 40 est dans son état 0 ou 1, T₂ est fixé selon une valeur maximale ou maximum correspondant à une température d'initialisation.

Ici, la valeur de T₂ semble liée uniquement à l'état du catalyseur 40 mais, comme on l'a vu précédemment, d'autres paramètres, liés à des caractéristiques propres au véhicule ou extérieures à celui-ci, peuvent être prises en compte pour la détermination de la valeur de la composante variable T₂ de la température de seuil Tₛ.

## Revendications

1. Système de pilotage de la température d'un catalyseur d'une ligne d'échappement de véhicule à motorisation hybride, comportant :
- un moteur thermique (2) ;
- au moins une autre source motrice (10, 18) ;
- au moins un stockeur d'énergie (12) pour alimenter l'autre source motrice (10, 18) ;
- un catalyseur (40) destiné au traitement des émissions polluantes provenant du moteur thermique (2), le catalyseur (40) étant chauffé lors de l'utilisation du moteur thermique (2) et présentant une température d'amorçage (Tₐ) à partir de laquelle ledit catalyseur (40) est en mode actif dans lequel ledit traitement est réalisé ; et
- un moyen d'analyse et de commande apte à déterminer une température instantanée (41) du catalyseur (40),
**caractérisé en ce que** le moyen d'analyse et de commande est agencé de sorte à :
- déterminer une température de seuil (Tₛ) du catalyseur (40) à partir d'une température de seuil prédéfinie (Tₛ₁) stockée dans le moyen d'analyse et de commande, à laquelle est rajoutée une valeur de température variable (T₂) déterminée par le moyen d'analyse et de commande en fonction d'au moins un paramètre du stockeur d'énergie (12),
- autoriser, lorsque ladite température de seuil (Tₛ) est atteinte, via la commande du moyen d'analyse et de commande, l'arrêt du chauffage du catalyseur (40) pendant une durée (t) tout en le maintenant en mode actif et
- commander le chauffage du catalyseur (40) jusqu'à atteindre la température de seuil (Tₛ) lorsqu'une température instantanée (41) du catalyseur (40) déterminée par le moyen d'analyse et de commande est inférieure à ladite température de seuil (Tₛ),

2. Système selon la revendication 1, **caractérisé en ce que** la valeur de température variable (T₂) est en outre fonction d'un ou de plusieurs paramètres parmi une ou plusieurs caractéristiques liées à la température instantanée (41) du catalyseur (40), une puissance disponible de l'autre source motrice (10, 18), un mode de conduite sélectionné par le conducteur ou déterminé par le moyen d'analyse et de commande, une marge de temporisation et/ou à des paramètres extérieurs au véhicule.

3. Système selon l'une quelconque des revendications précédentes, **caractérisé en ce que** la température de seuil (Tₛ) est au plus égale à une température maximum admissible (Tₘₐₓ) du catalyseur (40).

4. Système selon l'une quelconque des revendications précédentes, **caractérisé en ce que** la durée (t) est variable.

5. Système selon la revendication 4, **caractérisé en ce que** la variabilité de la durée (t) est fonction de la température extérieure et/ou, de l'altitude.

6. Système selon l'une quelconque des revendications précédentes, **caractérisé en ce que** la durée (t) est comprise entre 3 minutes et 60 minutes.

7. Système selon l'une quelconque des revendications précédentes, **caractérisé en ce que** l'autre source motrice (10, 18) consiste en au moins un moteur électrique.

8. Véhicule automobile hybride, **caractérisé en ce qu'**il comporte au moins un système de pilotage selon l'une quelconque des revendications précédentes.

9. Procédé de pilotage de la température d'un catalyseur d'une ligne d'échappement de véhicule à motorisation hybride, le catalyseur (40), destiné au traitement des émissions polluantes provenant du moteur thermique (2), étant chauffé lors de l'utilisation du moteur thermique (2) présentant une température d'amorçage (Tₐ) à partir de laquelle ledit catalyseur (40) est en mode actif dans lequel ledit traitement est réalisé, **caractérisé en ce qu'**une température de seuil (Tₛ) du catalyseur (40) est déterminée à partir d'une température de seuil prédéfinie (Tₛ₁) à laquelle est rajoutée une valeur de température variable (T₂) fonction d'au moins un paramètre d'un stockeur d'énergie (12) d'une autre source motrice (10, 18), ladite température de seuil (Tₛ) atteinte autorisant l'arrêt du chauffage du catalyseur (40) pendant une durée (t) tout en le maintenant en mode actif et **en ce que** lorsqu'une température instantanée (41) du catalyseur (40) déterminée est inférieure à ladite température de seuil (Tₛ), on commande le chauffage du catalyseur (40) jusqu'à atteindre la température de seuil (Tₛ).

## Patentansprüche

1. System zum Steuern der Temperatur eines Katalysators einer Abgasleitung eines Hybridkraftfahrzeugs, umfassend :
- eine Wärmekraftmaschine (2) ;
- mindestens eine weitere Motorquelle (10, 18) ;
- mindestens einen Energiespeicher (12) zur Versorgung der anderen Motorquelle (10, 18) ;
- einen Katalysator (40), der zur Behandlung von Schadstoffemissionen der Wärmekraftmaschine (2) bestimmt ist, wobei der Katalysator (40) während des Betriebs der Wärmekraftmaschine (2) erhitzt wird und eine Zündtemperatur (Tₐ) von wobei sich der Katalysator (40) im aktiven Modus befindet, in dem die Behandlung durchgeführt wird ; und
- Analyse und Kontrollmittel, die eine momentane Temperatur (41) des Katalysators (40) bestimmen können,
**dadurch gekennzeichnet, dass** das Analyse und Steuermittel eingerichtet ist, um :
- eine Schwellentemperatur (Tₛ) des Katalysators (40) aus einer vordefinierten Schwellentemperatur (Tₛ₁) zu bestimmen, die in dem Analyse und Steuermittel gespeichert ist, zu der hinzugefügt wird ein variable Temperaturwert (T₂) bestimmt durch die Analyse und Steuermittel in Abhängigkeit von mindestens einem Parameter des Energiespeichers (12),
- Autorisieren, wenn der Schwellentemperatur (Tₛ) ist, erreicht, über die Steuerung der Analyse und Steuermittel, die das Erhitzen des Katalysators (40) für einen Zeitraum (t) stoppen, während es im aktiven Modus gehalten wird, und
- Steuern des Erhitzens des Katalysators (40) bis zum Erreichen der Schwellentemperatur (Tₛ), wenn eine Momentantemperatur (41) des Katalysators (40), bestimmt durch die Analyse und Steuermittel, unter der Schwellentemperatur (Tₛ) liegt,

2. System nach Anspruch 1, **dadurch gekennzeichnet, dass** der variable Temperaturwert (T₂) auch eine Funktion von einem oder mehreren Parametern unter einer oder mehreren Eigenschaften ist, die sich auf die momentane Temperatur (41) des Katalysators (40), eine verfügbare Leistung von power die andere Fahrquelle (10, 18), einen vom Fahrer ausgewählten oder durch die Analyse und Steuermittel bestimmten Fahrmodus, eine Zeitverzögerungsreserve und/oder fahrzeugexterne Parameter.

3. System nach einem der vorhergehenden Ansprüche, **dadurch gekennzeichnet, daß** die Schwellentemperatur (Tₛ) höchstens gleich einer maximal zulässige Temperatur (Tₘₐₓ) des Katalysators (40).

4. System nach einem der vorhergehenden Ansprüche, **dadurch gekennzeichnet, daß** die Dauer (t) variabel ist.

5. System gemäß dem Anspruch 4, **dadurch gekennzeichnet, dass** die Variabilität der Dauer (t) ist eine Funktion der Außentemperatur und/oder Höhe.

6. System nach einem der vorhergehenden Ansprüche, **dadurch gekennzeichnet, daß** die Dauer (t) zwischen 3 Minuten und 60 Minuten.

7. System nach einem der vorhergehenden Ansprüche, **dadurch gekennzeichnet, dass** die andere Motorquelle (10, 18) aus mindestens einem Elektromotor besteht.

8. Hybrid-Kraftfahrzeug, **dadurch gekennzeichnet, dass** es mindestens ein Steuerungssystem nach einem der vorhergehenden Ansprüche umfasst.

9. Verfahren zum Temperieren eines Katalysators einer Abgasleitung eines Hybridkraftfahrzeugs, wobei der Katalysator (40), der zur Behandlung von Schadstoffemissionen der Wärmekraftmaschine (2) bestimmt ist, während des Betriebs der Wärmekraftmaschine (2) mit einem Zündtemperatur (Tₐ), ab der sich der Katalysator (40) im aktiven Modus befindet, in dem die Behandlung durchgeführt wird, **dadurch gekennzeichnet, dass** eine Schwellentemperatur (Tₛ) des Katalysators (40) aus einer vordefinierten Schwellentemperatur (Tₛ₁) zu dem ein variabler Temperaturwert (T₂) in Abhängigkeit von mindestens einem Parameter eines Energiespeichers (12) addiert wird einer anderen Antriebsquelle (10, 18), wobei die erreichte Schwellentemperatur (Tₛ) das Anhalten des Erhitzen des Katalysators (40) für einen Zeitraum (t), während er im aktiven Modus gehalten wird, und dadurch, dass, wenn eine bestimmte Momentantemperatur (41) des Katalysators (40) niedriger ist als die Temperatur Schwellwert (Tₛ) wird das Aufheizen des Katalysators (40) bis zum Erreichen der Schwelltemperatur (Tₛ) gesteuert.

## Claims

1. System for controlling the temperature of a catalyst of an exhaust line of a hybrid motor vehicle, comprising :
- a heat engine (2) ;
- at least one other motor source (10, 18) ;
- at least one energy store (12) for supplying the other motor source (10, 18) ;
- a catalyst (40) intended for the treatment of polluting emissions originating from the heat engine (2), the catalyst (40) being heated during the use of the heat engine (2) and having an ignition temperature (Tₐ) at from which said catalyst (40) is in the active mode in which said treatment is carried out ; and
- analysis and control means capable of determining an instantaneous temperature (41) of the catalyst (40),
**characterized in that** the analysis and control means are arranged so as to :
- determine a threshold temperature (Tₛ) of the catalyst (40) from a predefined threshold temperature (Tₛ₁) stored in the means analysis and control, to which is added a variable temperature value (T₂) determined by the analysis and control means as a function of at least one parameter of the energy store (12),
- authorize, when said threshold temperature (Tₛ) is reached, via the control of the analysis and control means, stopping the heating of the catalyst (40) for a period (t) while maintaining it in active mode and
- controlling heating the catalyst (40) until reaching the threshold temperature (Tₛ) when an instantaneous temperature (41) of the catalyst (40) determined by the analysis and control means is below said threshold temperature (Tₛ),

2. System according to claim 1, **characterized in that** the variable temperature value (T₂) is also a function of one or more parameters among one or more characteristics related to the instantaneous temperature (41) of the catalyst (40), a available power from the other motive source (10, 18), a driving mode selected by the driver or determined by the analysis and control means, a time delay margin and/or parameters external to the vehicle.

3. System according to any one of claims preceding, **characterized in that** the threshold temperature (Tₛ) is at most equal to a maximum allowable temperature (Tₘₐₓ) of the catalyst (40).

4. System according to any one of claims preceding, **characterized in that** the duration (t) is variable.

5. System according to the claim 4, **characterized in that** the variability of the duration (t) is a function of the outside temperature and/or altitude.

6. System according to any one of claims preceding, **characterized in that** the duration (t) is between 3 minutes and 60 minutes.

7. System according to any one of the preceding claims, **characterized in that** the other motor source (10, 18) consists of at least one electric motor.

8. Hybrid motor vehicle, **characterized in that** it comprises at least one control system according to any one of the preceding claims.

9. Process for controlling the temperature of a catalyst of an exhaust line of a hybrid motor vehicle, the catalyst (40), intended for treating pollutant emissions from the heat engine (2), being heated during use of the heat engine (2) having an ignition temperature (Tₐ) from which said catalyst (40) is in active mode in which said treatment is carried out, **characterized in that** a threshold temperature (Tₛ) of catalyst (40) is determined from a predefined threshold temperature (Tₛ₁) to which is added a variable temperature value (T₂) depending on at least one parameter of an energy store (12) d 'another motive source (10, 18), said threshold temperature (Tₛ) reached allowing the stopping of the heating of the catalyst (40) for a period (t) while maintaining it in active mode and **in that** when a determined instantaneous temperature (41) of the catalyst (40) is lower than said temperature threshold (Tₛ), the heating of the catalyst (40) is controlled until the threshold temperature (Tₛ) is reached.
